Europäisches Patentamt

European Patent Office

Office européen des brevets

(19)

(11) Publication number: **0 211 680**
A1

(12) **EUROPEAN PATENT APPLICATION**

(21) Application number: **86306223.8**

(22) Date of filing: **12.08.86**

(51) Int. Cl.⁴: **G 01 H 3/10**
**A 61 B 17/22**

(30) Priority: **12.08.85 GB 8520182**

(43) Date of publication of application:
**25.02.87 Bulletin 87/9**

(84) Designated Contracting States:
**AT BE CH DE FR GB IT LI LU NL SE**

(71) Applicant: **The Special Trustees for St. Thomas' Hospital**
**St. Thomas' Hospital**
**London SE1 7EH(GB)**

(72) Inventor: **Coleman, Andrew John**
**17, Silverwood Close**
**Beckenham Kent BR3 1RN(GB)**

(72) Inventor: **Saunders, John Edward**
**24 Wallis Road**
**Basingstoke Hants RG21 3DN(GB)**

(74) Representative: **Votier, Sidney David et al,**
**CARPMAELS & RANSFORD 43, Bloomsbury Square**
**London WC1A 2RA(GB)**

(54) **Method of calibrating a kidney lithotripter.**

(57) The present invention provides method of calibrating a kidney lithotripter or monitoring the effectiveness of the electrodes of a kidney lithotripter comprising:

placing a pressure sensitive recording medium in the lithotripter tank with a part of the recording medium located at the expected focus (10) of the acoustic wave;

inducing a spark across the electrodes (3); and

observing the pattern recorded on the recording medium as a result of the action of the acoustic wave thereon.

Fig 1

EP 0 211 680 A1

# METHOD OF CALIBRATING A KIDNEY LITHOTRIPTER

The present invention relates to a method of calibrating a kidney lithotripter.

A well known medical condition is urolithiasis which consists of the formation of stones in the kidney or upper urinary tract. It is also known that similar stones can be formed in the gall bladder. The formation of such stones can cause much discomfort to a patient suffering from urolithiasis. In some cases the condition may have serious or even fatal consequences for the patient.

Treatment of urolithiasis has up until recently involved the surgical removal of the stones by an operation. However, in up to 50% of cases there will be a recurrence of the condition, necessitating one or more further operations. This can in some cases eventually lead to failure of the organ after repeated operations. Moreover, carrying out repeated surgical operations on a patient is both hazardous for the patient and is a drain on the resources of any health service.

In order to obviate the disadvantages of the surgical treatment of urolithiasis, a non-invasive technique for removing stones has been developed. This is generally known as extracorporeal lithotripsy and involves the application of acoustic waves to the stone. The acoustic waves are only able efficiently to transfer energy to a body at an interface between a relatively rigid material and a relatively flexible material. Thus, in general, such acoustic waves pass through a human body. However, where the acoustic wave encounters a rigid stone, for instance in the kidney, energy is transferred to the stone which is caused to disintegrate.

- 2 -

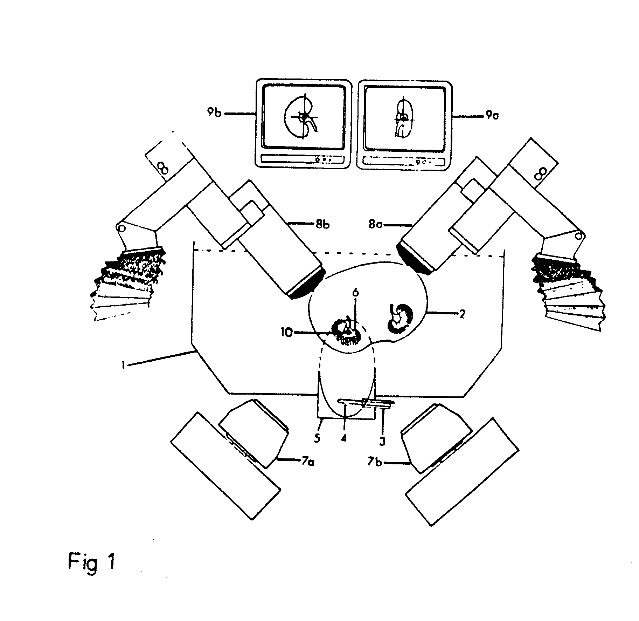

One particular apparatus, known as a kidney lithotripter, for applying acoustic waves to stones formed by urolithiasis is shown diagrammatically in Figure 1 of the accompanying drawings, to which reference is now made. The apparatus comprises a tank 1 which, in use, is filled with water at approximately body temperature. The patient, indicated schematically at 2, is held in a fixed position in the tank 1 by a frame (not shown) which is movable in three dimensions.

The apparatus further comprises a pair of electrodes 3 separated by a gap 4 across which a spark is induced by conventional electrical circuitry (not shown). Voltages of the order of 20kV are discharged across the gap 4 to produce the spark. The gap 4 is located at one focus of an elliptical reflector 5. When a spark is induced across the gap 4, a high pressure acoustic wave (which may also be termed a shock wave) is created. The acoustic wave is reflected by the reflector 5 and is refocused at the other focus 10 of the ellipse defined by the reflector 5.

The patient 2 is located in the tank 1 so that the stone 6 to be disintegrated is located at the other focus 10 of the ellipse. To enable this to be achieved, the apparatus further comprises a two axis x-ray system including x-ray sources 7a, 7b, x-ray detectors 8a, 8b and display units 9a, 9b. The position of the patient is adjusted by use of the movable frame until the stone 6 to be disintegrated is visualised on the centre of the cross on each of the display units 9a, 9b.

Different apparatuses may be used to perform extracorporeal lithotripsy and may incorporate different acoustic wave generating and stone localisation systems. All such apparatuses are referred to herein generically as kidney lithotripters.

In order to ensure that a stone to be disintegrated is correctly located at the focus of the acoustic wave when it apparently shown by the stone localisation system to be in the correct place, it is necessary to calibrate the apparatus. At present, this is achieved by use of a pressure transducer which is incrementally moved through the tank as acoustic waves are produced. This is an arduous and time-consuming process which requires skilled operators to carry it out.

The calibration is generally only carried out at the initial setting up of the apparatus. However, during its operation, the parameters of the apparatus may change, thus making the calibration incorrect.

For instance, as the sparks are induced across the electrodes, they become worn away, and eventually need replacing. As they become worn away, the point at which the shock wave originates may no longer be coincident with the first focus of the ellipse or the point may become broadened into a small volume. This may result in the focused shock wave missing or only partly hitting the stone. Alternatively or additionally, it may result in the production of a less well focused shock wave which may be less effective in disintegrating the stone.

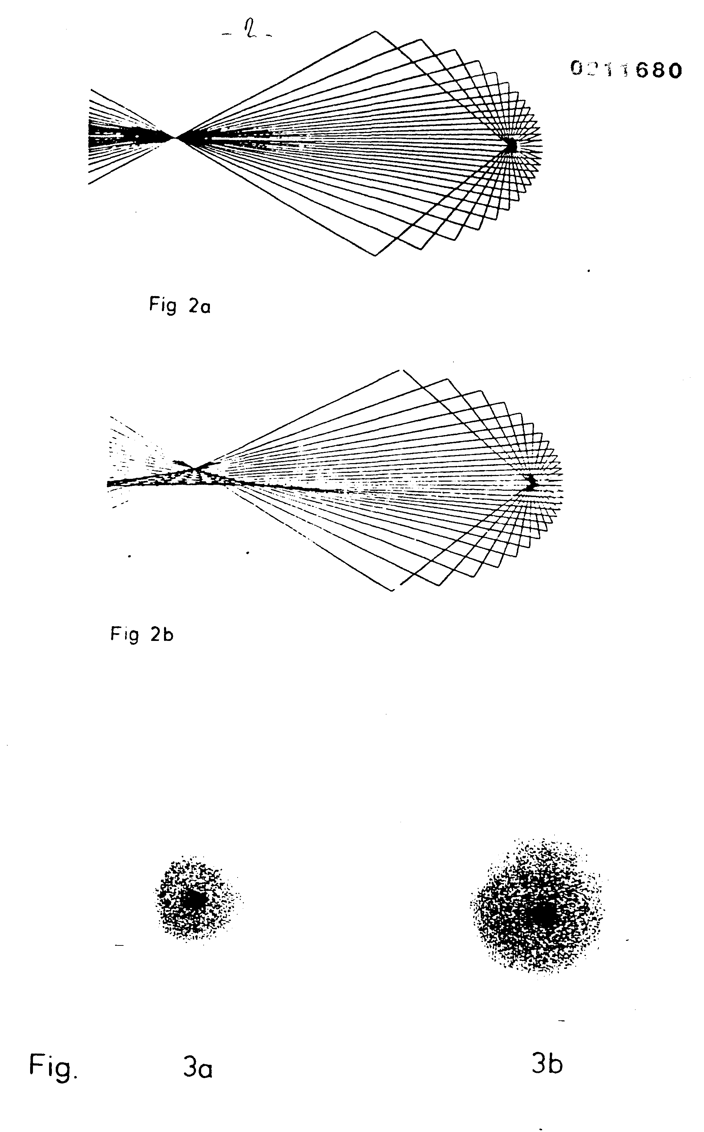

This can be seen diagramatically from Figure 2 of the accompanying drawings, to which reference is now made. In Figure 2a there is shown the shock wave envelope produced when the gap is correctly located. This produces a well defined focus at the desired position. Figure 2b shows a shock wave envelope which is produced by an incorrectly located gap, and which does not produce a sharply focused wave at the second focus. (These drawings were produced using the method of the present invention.)

At present, it is the practice to replace the electrodes after a preset number of sparks have been induced. This may result in a set of electrodes being discarded before they become ineffective or may result in an ineffective set of electrodes being used for a significant number of operations. As the electrodes themselves are rather expensive, this can provide a significant unnecessary financial cost.

It is therefore desirable to be able to calibrate such an apparatus and to monitor the effectiveness of the electrodes in such an apparatus in a simple, expeditious and inexpensive manner.

Howkins (Howkins, S.D., J. Sci. Instrum., 44, 43-46, 1967, "The carbon paper pressure indicator") discloses a technique for measuring peak pressures of repeated high amplitude sound pulses in liquids. The method is not used to calibrate the pulse generator or to determine the location of the focus of such a pulse.

According the the present invention, there is provided a method of calibrating a kidney lithotripter or monitoring the effectiveness of the electrodes of a kidney lithotripter comprising:

placing a pressure sensitive recording medium in the lithotripter tank with a part of the recording medium located at the expected focus of the acoustic wave;

inducing a spark across the electrodes; and observing the pattern recorded on the recording medium as a result of the action of the acoustic wave thereon.

Preferably, the method includes the step of scanning the pressure sensitive recording medium to determine the density of the pattern thereon. This may be carried out using any of the density scanners presently available.

The recording medium may be located in the correct position in the tank either by use of the x-ray or other stone localisation system in conjunction with an x-ray opaque material on or in the recording medium or by use of a calibrated holder for the recording medium. Alternatively, in certain apparatuses, the recording medium may be located by use of an ultrasound system.

Preferably, the recording medium is movably located in the tank whereby a series of exposures thereof to acoustic waves at different locations may be made.

By observing the pattern on the pressure sensitive layer it is possible to determine whether the acoustic wave is correctly focused at the other focus of the ellipse and to determine if the acoustic wave, even if correctly focused, will be effective to disintegrate a stone. It will also be possible to compare different apparatuses.

The recording medium may comprise a sheet of a soft metal, such as lead or a lead alloy, which is deformable by an acoustic wave but sufficiently malleable to retain its deformed shape.

Alternatively, the pressure sensitive recording medium is provided in the form of a cassette comprising a pressure sensitive layer located on a backing sheet.

The backing sheet may be of flexible or rigid material.

Preferably, the backing sheet with the pressure sensitive layer is contained in a bag of waterproof flexible material. Advantageously, the bag is evacuated. This ensures that the pressure sensitive layer, when separate from the backing sheet, firmly abuts the backing sheet.

The backing sheet may be of any suitable material such as metal, for instance stainless steel, or plastics, for instance polycarbonate or polyamide. The backing sheet may be integral with or separate from the pressure sensitive layer.

The backing sheet and the pressure sensitive layer may be transparent to x-rays, and the backing sheet may have on or in it an x-ray opaque area of one or two square millimetres, whereby the cassette may be located by use of a lithotripter x-ray system.

The pressure sensitive layer may comprise any of the pressure sensitive materials known per se, but in one preferred construction the pressure sensitive layer comprises a sheet of photographic film. In this case, the cassettes will need to be located in a light proof bag. Such film is pressure sensitive in that, on normal development, pressure induced fogging is noticeable. Also, pressure desensitises the film to x-rays. Therefore if the film is briefly exposed to x-rays after exposure to pressure and then developed, the areas which have been subject to pressure will appear as white areas on a black background.

In an advantageous alternative, the pressure sensitive layer comprises a sheet of carbon paper having its 'carbon' side adjacent a sheet of blank paper. Preferably the blank paper is transparent. For instance, the blank paper may comprise a sheet of tracing paper. On application of pressure, the 'carbon' will be transferred from the carbon paper to the blank paper.

In an alternative construction, the carbon paper may be replaced by a suitable carbonless copying paper.

Some embodiments of the present invention will now be described, by way of example only, with reference to the accompanying drawings, in which:

Figure 1 is a diagrammatic view of a kidney lithotripter;

Figures 2a and 2b show diagrammatically the effect of moving the electrode gap away from the first focus of the ellipsoidal reflector;

Figures 3a and 3b show an exposed pressure sensitive layer from a cassette used in the method of the present invention; and

Figures 4, 5 and 6 show scans of exposed pressure sensitive layers from cassettes used in the method of the present invention.

A first cassette was prepared by locating a sheet of tracing paper on a sheet of stainless steel. A sheet of carbon paper was laid on the sheet of tracing paper with its 'carbon' side in contact with the tracing paper. The laminate was placed in a polyethylene bag which was evacuated and sealed. This brought the three sheets into firm contact.

Second and third cassettes were prepared by locating a sheet of photographic film on a sheet of stainless steel. These laminates were also placed in sealed, evacuated polyethylene bags. These bags were lightproof, and the cassette was assembled in controlled conditions to prevent inadvertent exposure of the film.

Each cassette was then placed in the tank of a kidney lithotripter with the pressure sensitive layer located at the expected other focus of the ellipse. A spark was then induced across the electrodes. The cassette was moved and the process repeated a number of times to produce a number of impressions on each cassette.

In the case of the first cassette, the tracing paper was removed from the cassette and inspected. Typical traces are shown in Figure 3, to which reference is now made.

It can be seen from the traces that the acoustic wave which appears at the second focus can vary from the highly effective uniform wave of Figure 3a to the less effective diffuse wave of Figures 3b.

In the case of the second cassette, the film was removed from the cassette and developed in the normal way without exposure. The effect of the acoustic wave was to produce pressure fogging, which gives black areas on a white background.

In the case of the third cassette, the film was briefly exposed to x-rays and then developed in the normal way. The areas which were subjected to pressure are less sensitive to x-rays, and therefore the film develops as areas of white on a black background.

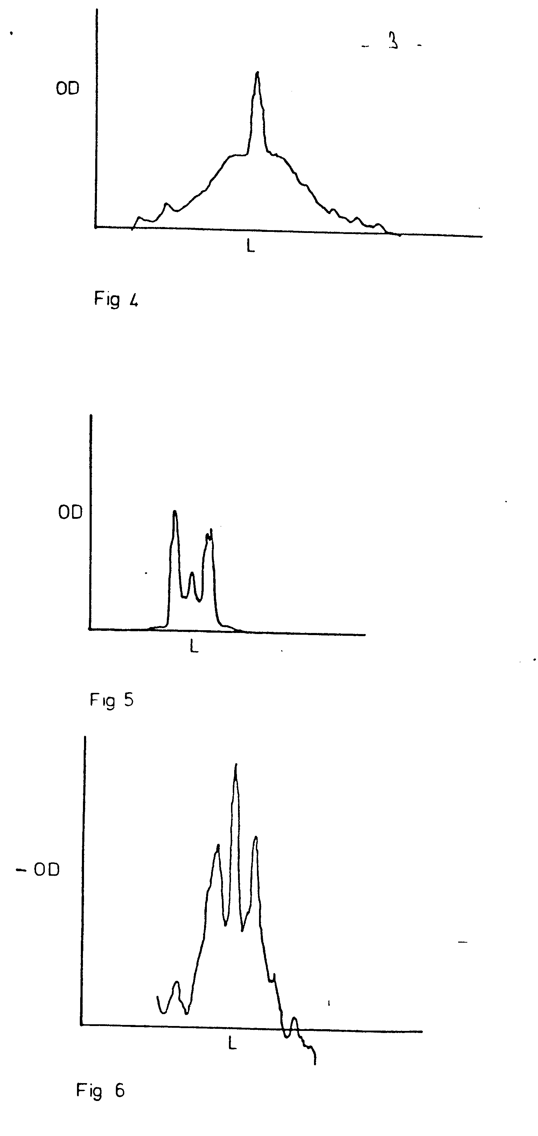

The tracing paper or film was then scanned using a conventional scanning system (in this case a photodensitometer) to give the traces shown in Figures 4 to 6. Figure 4 shows a trace derived from tracing paper. Figure 5 shows a trace derived by the pressure fogging effect, and Figure 6 shows a trace derived by the x-ray desensitization effect.

It can be seen that these traces not only show how well or badly the acoustic wave is focused, by the width of the trace, but also where the most pressure is applied. From this latter observation it can be determined whether the acoustic wave would cause the disintegration of a stone.

The method of the present invention can be used readily to determine whether a kidney lithotripter is correctly calibrated and to monitor the effectiveness of the electrodes therein. It will thus be possible to ensure as far as possible that each operation performed by the lithotripter is effective in disintegrating the targetted stone. This, it is envisaged, will increase both the financial and therapeutic efficienty of the procedure.

## CLAIMS

1. A method of calibrating a kidney lithotripter or monitoring the effectiveness of the electrodes of a kidney lithotripter comprising:

placing a pressure sensitive recording medium in the lithotripter tank with a part of the recording medium located at the expected focus of the acoustic wave;

inducing a spark across the electrodes; and observing the pattern recorded on the recording medium as a result of the action of the acoustic wave thereon.

2. The method of claim 1, and including the step of scanning the pressure sensitive recording medium to determine the density of the pattern thereon.

3. The method of claim 1 or claim 2, wherein the recording medium is located at the correct position by use of the lithotripter's stone location system.

4. The method of claim 1 or claim 2, wherein the recording medium is located at the correct position by use of a calibrated holder.

5. The method of any one of claims 1 to 4, wherein the pressure sensitive recording medium is a sheet of soft malleable metal.

6. The method of ony one of claims 1 to 4, wherein the pressure sensitive recording medium is provided in the form of a cassette comprising a pressure sensitive layer on a backing sheet

7. The method of claim 6, wherein the cassette is contained in a bag of waterproof flexible material.

8. The method of claim 6 or claim 7, wherein the pressure sensitive layer comprises a sheet of carbon paper with its carbon side adjacent a sheet of blank paper.

9. The method of claim 6 or claim 7, wherein the pressure sensitive layer comprises a sheet of photographic film.

10. The method of any one of claims 6 to 9, wherein the cassette includes an area which is opaque to x-rays for use in locating the cassette in the lithotripter.

Fig 1

Fig 2a

Fig 2b

Fig.    3a            3b

OD

L

Fig 4

OD

L

Fig 5

− OD

L

Fig 6

0211680

− 3 −

## European Patent Office

**EUROPEAN SEARCH REPORT**

### DOCUMENTS CONSIDERED TO BE RELEVANT

| Category | Citation of document with indication, where appropriate, of relevant passages | Relevant to claim | CLASSIFICATION OF THE APPLICATION (Int. Cl 4) |
|---|---|---|---|
| D,Y | JOURNAL OF SCIENTIFIC INSTRUMENTATION, vol. 44, January 1967, pages 43-46, London, GB; S.D. HOWKINS: "The carbon paper pressure indicator" * Page 43, column 2, lines 21-45; page 44, column 2, lines 14-25; figure 1 * | 1,2,7, 8 | G 01 H 3/10 A 61 B 17/22 |
| | --- | | |
| Y | RESEARCH DISCLOSURE, no. 201, January 1981, pages 30-51, abstract no. 20139, Havant, Hampshire, GB; "Ultrasonographic imaging" * Page 32, column 1, lines 24-33; page 33, column 1, lines 7-24; page 35, column 2, lines 70-80; page·36, column 1, lines 9-27; figure 1 * | 1,2,6, 9 | |
| | --- | | TECHNICAL FIELDS SEARCHED (Int Cl 4) |
| Y | DE-A-3 220 751 (J. SCHÜLLER) * Abstract; figure 1 * | 1,2,6- 9 | G 01 H A 61 B |
| | ----- | | |

The present search report has been drawn up for all claims

| Place of search | Date of completion of the search | Examiner |
|---|---|---|
| THE HAGUE | 28-10-1986 | ARGENTINI A. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82